**Europäisches Patentamt**

**European Patent Office**

**Office européen des brevets**

(19)

(11) Veröffentlichungsnummer : **0 179 315 B1**

# (12) EUROPÄISCHE PATENTSCHRIFT

(45) Veröffentlichungstag der Patentschrift :
09.01.91 Patentblatt 91/02

(51) Int. Cl.$^5$ : **B29C 47/64, B29C 47/38**

(21) Anmeldenummer : **85112437.0**

(22) Anmeldetag : **01.10.85**

(54) Einschneckenstrangpresse für thermoplastische und elastomere Massen.

(30) Priorität : **22.10.84 DE 3438649**

(43) Veröffentlichungstag der Anmeldung :
**30.04.86 Patentblatt 86/18**

(45) Bekanntmachung des Hinweises auf die
Patenterteilung :
**09.01.91 Patentblatt 91/02**

(84) Benannte Vertragsstaaten :
**FR GB IT**

(56) Entgegenhaltungen :
**EP-A- 0 144 192**
**DE-A- 2 634 024**
**DE-A- 3 003 615**
**DE-B- 1 198 051**
**DE-B- 1 245 584**

(56) Entgegenhaltungen :
**DE-B- 2 235 784**
**FR-A- 1 133 446**
**GB-A- 2 048 701**
**US-A- 4 541 982**

(73) Patentinhaber : **Windmöller & Hölscher**
**Münsterstrasse 48-52**
**D-4540 Lengerich I.W. (DE)**

(72) Erfinder : **Upmeier, Hartmut, Dipl.-Ing.**
**Jahnstrasse 25**
**D-4540 Lengerich (DE)**

(74) Vertreter : **Lorenz, Eduard**
**Rechtsanwälte Eduard Lorenz - Bernhard**
**Seidler Margrit Seidler - Dipl.-Ing. Hans-K.**
**Gossel Dr. Ina Philipps - Dr. Paul B. Schäuble**
**Dr. Siegfried Jackermeier**
**Widenmayerstrasse 23 D-8000 München 22**
**(DE)**

# Beschreibung

Die Erfindung betrifft eine Einschneckenstrangpresse für thermoplastische und elastomere Massen mit einem hohlzylindrischen Gehäuse, das mit radial nach innen ragenden Mischelementen versehen ist, und mit einer in dem Gehäuse angeordneten Schnecke, deren Steg oder Stege mit Aussparungen zum Durchtritt der Mischelemente versehen sind.

Beispielsweise aus der DE-AS 12 45 584, der DE-AS 22 35 784, der DE-OS 26 34 024, der DE-OS 30 03 615 und der Zeitschrift "Kunststoffberater" 3/1984, Seite 25, ist es bekannt, durch die Zylinderwand bis in den Schneckenkanal ragende Stifte vorzusehen, die den oder die Schneckenstege in in diesen vorgesehenen Aussparungen kreuzen. Durch diese Stifte wird eine gute Mischwirkung erzielt, weil diese die Kunststoffschmelze daran hindern, mit der Schnecke mitzudrehen.

Bei den bekannten Einschneckenstrangpressen sind die Mischstifte radial in das einstückige Gehäuse eingeschraubt, so daß sich nicht nur Schwierigkeiten bei der Montage ergeben, sondern bei üblicherweise nur an einigen Stellen auftretenden Verschleiß das gesamte Gehäuse unbrauchbar wird und ausgetauscht werden muß.

Aus der FR-A-1 133 446 sind Einschneckenstrangpresse für thermoplastische Massen bekannt, deren Gehäuse aus ringförmigen Gehäuseabschnitten aufgebaut ist. Deren inneren Randbereiche bilden im miteinander verspannten Zustand die Flanken von Nuten, zwischen denen die aus geteilten Scheiben bestehenden Mischelemente festgeklemmt sind. In dem scheibenförmigen Mischelementen sind für den Durchtritt der thermoplastischen Massen entsprechende rechteckige oder lochartige Ausnehmungen vorgesehen.

Aus der älteren europäischen Patentanmeldung EP-A-0144192, die allerdings erst nach dem Prioritätstag der vorliegenden Anmeldung veröffentlicht worden ist, ist eine Einschneckenstrangpresse mit einem hohlzylindrischen Gehäuse bekannt, das mit radial nach innen ragenden Vorsprüngen versehen ist, und mit einer in dem Gehäuse angeordneten Schnecke, deren Steg oder Stege mit Aussparungen zum Durchtritt der Vorsprünge versehen sind, wobei die Vorsprünge an geteilten Ringen vorgesehen sind, die durch zwischen diesen angeordneten Distanzringen im axialen Abstand voneinander gehalten sind.

Aufgabe der Erfindung ist es, eine Einschneckenstrangpresse zu schaffen, die sich bei Verbesserung der Mischwirkung einfach montieren und bei auftretenden Schäden am Gehäuse einfach reparieren läßt, ohne daß das gesamte Gehäuse ausgetauscht werden muß.

Diese Aufgabe wird erfindungsgemäß dadurch gelöst, daß die Mischelemente an geteilten Ringen vorgesehen sind, wobei die Ringe mit abwechselnd gegensinnig geneigten Kanälen versehen sind, deren Ein- bzw. Ausläufe im Bereich der Gehäusewandung bzw. des Schneckenkerns liegen und daß die Ringe durch zwischen diesen angeordnete Distanzringe im axialen Abstand voneinander gehalten sind. Die Distanzringe bilden mit ihren inneren Wandungen die Wandung des Schneckengehäuses, so daß bei auftretenden Schäden nur der betreffende Distanzring ausgetauscht zu werden braucht. Die Ein- bzw. Ausläufe der in den Ringen vorgesehenen abwechselnd gegensinnig geneigten Kanäle liegen im Bereich der Gehäusewandung bzw. des Schneckenkerns. Derartige Ringe sind an sich aus der DE-AS 2 023 910 sowie der DE-OS 3 317 347 bekannt. Diese sind jedoch mit der Schnecke mitrotierend ausgebildet. Die erfindungsgemäß an dem Gehäuse festgelegten Mischringe verhindern ein Mitrotieren der Schmelze und steigern dadurch die Mischwirkung.

Aus der DE-AS 1 198 051 ist eine Schneckenstrangpresse bekannt, die in ihrem vorderen Bereich eine Homogenisierungszone aufweist, die aus auf einen den Schneckenkern verlängernden Zapfen abwechselnd aufgeschobenen, ineinander greifenden inneren und äußeren Ringen mit axialen Durchbrüchen gebildet ist, von denen die inneren Ringe drehfest mit dem Zapfen und die äußeren Ringe drehfest mit dem zylindrischen Gehäuse verankert sind. Das wechselweise ineinander Schichten der inneren und äußeren Ringe bedingt jedoch eine komplizierte Montage und ermöglicht insbesondere keine einstückige Fertigung der Schnecke.

Um zu verhindern, daß sich die Ringe und auch die Distanzringe mitdrehen, können diese mit Verdrehsicherungen gegenüber dem Gehäuse versehen sein.

In einer weiteren Ausbildung der zuvor genannten Lösung kann das Gehäuse aus ringförmigen oder rohrförmigen Gehäuseabschnitten aufgebaut sein, deren inneren Randbereiche im miteinander verspannten Zustand die Flanken von Nuten bilden, zwischen denen die aus Ringen bestehenden Mischelemente festgeklemmt sind. Im Falle auftretender Beschädigung braucht dann nur der betreffende Zylinderabschnitt ausgetauscht zu werden.

Ausführungsbeispiele der Erfindung werden nachstehend anhand der Zeichnungen näher erläutert. In dieser zeigt

Fig. 1 einen Längsschnitt durch eine Einschneckenstrangpresse, und zwar in der oberen Hälfte mit einem aus einzelnen ringförmigen Elementen zusammengesetzten Gehäuse und in der unteren Hälfte mit Mischringen, die durch Distanzringe in axialer Richtung festgelegt sind,

Fig. 2 einen radialen Querschnitt durch die Einschneckenstrangpresse längs der Linie II - II in Fig. 1,

Fig. 3 einen teilweisen Axialschnitt durch den oberen Teil der Einschneckenstrangpresse nach Fig. 1, und zwar durch eine Ausführungsform, bei der die Ringe abwechselnd mit gegensinnig geneigten Kanälen versehen sind, und

Fig. 4 einen radialen Teilschnitt durch eine Einschneckenstrangpresse längs der Linie IV - IV in Fig. 3.

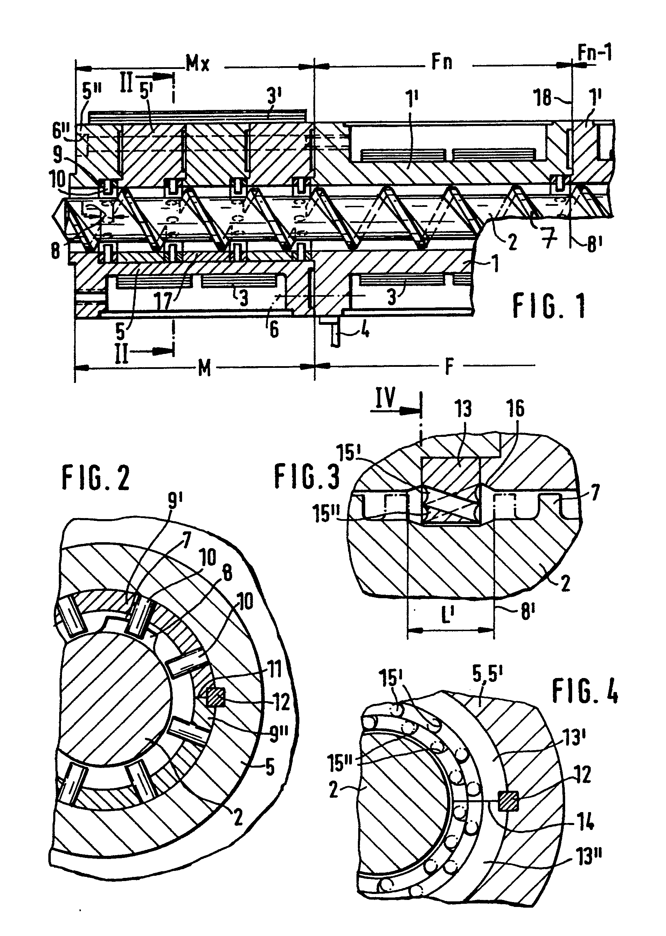

Nach dem unteren Teil der Fig. 1 ist in dem einstückigen Förderzylinder 1 mit der Gesamtlänge F die Förderschnecke 2 mit den Schneckengängen 7 gelagert. Die Heiz- und/oder Kühlelemente 3 sowie die das aus dem Förderzylinder 1 bestehende Gehäuse tragenden Stützen 4 sind nur schematisch angedeutet. Mit dem einstückigen Gehäuse 1 ist das ebenfalls einstückige Gehäuse 5 der Mischzone mit der Gesamtlänge M verbunden, und zwar in der angedeuteten Weise über an den Gehäusen vorgesehenen Ringflanschen. Auch das Gehäuse 5 der Mischzone wird über Heiz-und/oder Kühlelemente temperiert. Die die Gehäuseteile verbindenden Schrauben sind durch eine strichpunktierte Linie angedeutet.

In die Bohrung des einstückigen Gehäuses 5 der Mischzone sind halbierte Mischringe 9', 9" mit radial nach innen weisenden und in die Schneckenstege eingreifenden Mischstiften 10 eingesetzt, die in den Aussparungen 8 den durch diese unterbrochenen Schnekkensteg 7 kreuzen. Die Mischringe 9', 9" werden durch gehärtete Distanzringe 17 in dem erforderlichen axialen Abstand voneinander gehalten.

Die halbierten Mischringe 9', 9" und die diese festlegenden Distanzringe 17 werden durch achsparallele Paßfedern 12 am Mitdrehen gehindert, wobei die Paßfedern 12 zweckmäßigerweise in Nuten angeordnet sind, die achsparallel in den Trennflächen 11 der Mischringe liegen.

Infolge des vergleichsweise geringen Durchmessers der Mischstifte 10 können die die Schneckenstege 7 durchbrechenden Aussparungen 8 eine entsprechend geringere axiale Länge L' aufweisen.

Bei der in dem oberen Teil der Fig. 1 dargestellten Ausführungsform ist das Gehäuse des Förderzylinders mehrteilig aus vorzugsweise abmessungsgleichen Ringen in Form von Teilzylindern 1' mit den Teillängen Fn, Fn-1 zusammengesetzt, wobei die innenliegenden Bereiche der radialen Verbindungsebenen 18 in der dargestellten Weise stufenförmig abgesetzt sind, so daß in die dadurch gebildeten Umfangsnuten Mischstiftringe 9, 10 eingesetzt und festgeklemmt werden können.

In entsprechender Weise ist auch die Mischzone aus einzelnen flanschförmigen Ringen 5', 5" mit der Gesamtlänge Mx zusammengesetzt. Die Ringe werden durch die Verbindungsschrauben 6" zusammengehalten und durch die Heiz- oder Kühlelemente 3' temperiert.

Nach einer anderen Ausgestaltung ist vorgesehen, daß in der Schmelze-Mischzone M halbierte stationäre Mischelementringe 13, 13', 13" mit

achsparallelen Trennflächen 14 eingesetzt sind, in die mit abwechselnder Steigungsrichtung verlaufende Schmelzekanäle 15', 15" eingearbeitet sind.

Bei der Ausführungsform nach Fig. 3 sind die umlaufenden nutförmigen Durchbrüche 8' in dem Schneckensteg 7 mit der größeren Breite L' ausgeführt. Dadurch wird die nutzbare Durchtrittsfläche der Mischringelemente 13 größer. Die Mischringe 13 greifen durch entsprechende Vertiefung der Nuten tiefer in den Gehäusemantel ein, wobei die Innenwandung des Gehäuses und auch der Kerndurchmesser der Förderschnecke 2 mit im wesentlichen kegelmantelförmigen Übergangsflächen 16 versehen sind, die die Zuführung und den Eintritt der Schmelze in die sich kreuzenden Schmelzekanäle 15', 15" begünstigen.

## Ansprüche

1. Einschneckenstrangpresse für thermoplastische und elastomere Massen mit einem hohlzylindrischen Gehäuse, das mit radial nach innen ragenden Mischelementen versehen ist und mit einer in dem Gehäuse angeordneten Schnecke, deren Steg oder Stege mit Aussparungen zum Durchtritt der Mischelemente versehen sind,
dadurch gekennzeichnet,
daß die Mischelemente an geteilten Ringen (13) vorgesehen sind, wobei die Ringe mit abwechselnd gegensinnig geneigten Kanälen (15', 15") versehen sind, deren Ein-bzw. Ausläufe im Bereich der Gehäusewannung bzw. des Schneckenkerns liegen und daß die Ringe durch zwischen diesen angeordnete Distanzringe (17) im axialen Abstand voneinander gehalten sind.

2. Einschneckenstrangpresse nach Anspruch 1, dadurch gekennzeichnet, daß die Ringe (9) und Distanzringe (17) mit Verdrehsicherungen gegenüber dem Gehäuse (1, 5) versehen sind.

3. Einschneckenstrangpresse nach Anspruch 2, dadurch gekennzeichnet, daß die Verdrehsicherungen aus in den Ringen und Distanzringen sowie in der Innenwand des Gehäuses vorgesehenen axialen Nuten bestehen, in die Federn eingelegt sind.

4. Einschneckenstrangpresse nach einem der Ansprüche 1-3, dadurch gekennzeichnet, daß das Gehäuse aus ringförmigen oder rohrförmigen Gehäuseabschnitten (1', 5', 5") aufgebaut ist, deren inneren Randbereiche im miteinander verspannten Zustand die Flanken von Nuten bilden, zwischen denen die aus geteilten Ringen bestehenden Mischelemente festgeklemmt sind.

5. Einschneckenstsrangpresse nach einem der Ansprüche 1-4, dadurch gekennzeichnet, daß die Ringe in einer axialen Mittelebene geteilt sind.

6. Einschneckenstrangpresse nach Anspruch 5, dadurch gekennzeichnet, daß die Ringe auf ihren Außenseiten beidseits ihrer Trennfugen zueinander spiegelbildlichen stufenförmigen Ausnehmungen versehen sind, die im zusammengesetzten Zustand eine Nut für eine in eine Nut des Gehäuses eingreifende Feder oder dergleichen bilden.

## Claims

1. A single-screw extruder for thermoplastic and elastomeric materials, having a hollow cylindrical barrel which is provided with radially inward projecting mixing elements, and having within the barrel a screw whose flight or flights are provided with recesses for the mixing elements to pass through, characterized in that the mixing elements are arranged on divided rings (13), the rings having alternating oppositely inclined channels (15′, 15″) whose inlets or outlets are in the region of the barrel wall or of the screw root, and that the rings are kept at an axial distance apart from one another by spacer rings (17) arranged between them.

2. Single-screw extruder according to Claim 1, characterized in that the rings (9) and spacer rings (17) are provided with rotation stops operating against the barrel (1, 5).

3. Single-screw extruder according to Claim 2, characterized in that the rotation stops consist of axial grooves provided in the rings and spacer rings and in the inner wall of the barrel, into which keys have been inserted.

4. Single-screw extruder according to any one of Claims 1-3, characterized in that the barrel is constructed from annular or tubular barrel sections (1′, 5′, 5″) whose internal edge regions, in the tightly assembled condition, form the flanks of grooves between which the mixing elements consisting of divided rings are firmly clamped .

5. Single-screw extruder according to an one of Claims 1-4, characterized in that the rings are divided in a central axial plane.

6. Single-screw extruder according to Claim 5, characterized in that the rings are provided externally on either side of their parting lines with mutually mirror-image step-like recesses which, in the assembled condition, form a groove for a key, or the like, which engages in a groove of the barrel.

## Revendications

1. Extrudeuse à monovis pour des matières thermoplastiques élastomériques comportant un bâti cylindrique creux pourvu d'éléments mélangeurs faisant saillie radialement vers l'intérieur et une vis sans fin placée dans le bâti, vis sans fin dont la ou les ailettes sont pourvues d'évidements pour le passage des éléments mélangeurs, caractérisée en ce que les éléments mélangeurs sont prévus sur des anneaux partagés en deux (13), ceux-ci étant pourvus de canaux inclinés alternativement en sens inverse (15′, 15″), dont les entrées et les sorties se situent dans la zone de la paroi du bâti ou du noyau de la vis sans fin et en ce que les anneaux sont maintenus à distance axiale les uns des autres par des anneaux d'écartement (17) placés entre eux.

2. Extrudeuse à monovis selon la revendication 1, caractérisée en ce que les anneaux (9) et les anneaux d'écartement (17) sont pourvus de sécurités de torsion par rapport au bâti (1, 5).

3. Extrudeuse à monovis selon la revendication 2, caractérisée en ce que les sécurités de torsion se composent de rainures axiales prévues dans les anneaux et les anneaux d'écartement ainsi que dans la paroi interne du bâti, dans lesquelles sont introduits des ressorts.

4. Extrudeuse à monovis selon l'une quelconque des revendications 1 à 3, caractérisée en ce que le bâti est constitué de segments annulaires ou tubulaires (1′, 5′, 5″), dont les régions marginales internes forment dans l'état déformé entre elles les flancs de rainures, entre lesquelles sont bloqués les éléments mélangeurs se composant d'anneaux partagés.

5. Extrudeuse à monovis selon l'une quelconque des revendications 1 à 4, caractérisée en ce que les anneaux sont partagés dans un plan médian axial.

6. Extrudeuse à monovis selon la revendication 5, caractérisée en ce que les anneaux sont pourvus sur leurs côtés extérieurs de part et d'autre de leurs joints de séparation d'évidements en échelons réfléchis les uns par rapport aux autres, qui, dans l'état assemblé, forment une rainure pour un ressort ou analogue pénétrant dans une rainure du bâti.

FIG. 1

FIG. 2

FIG. 3

FIG. 4